Europäisches Patentamt

European Patent Office

Office européen des brevets

(19)

(11) Veröffentlichungsnummer: **0 011 100**
**A1**

(12)                     # EUROPÄISCHE PATENTANMELDUNG

(21) Anmeldenummer: 79103395.4

(22) Anmeldetag: **12.09.79**

(51) Int. Cl.³: **G 01 M 17/06**
**G 01 B 5/255**

(30) Priorität: 16.09.78 DE 2840408

(43) Veröffentlichungstag der Anmeldung:
28.05.80 Patentblatt 80/11

(84) Benannte Vertragsstaaten:
AT BE CH FR GB IT NL SE

(71) Anmelder: Fischer-Stahlbau Karl Josef Fischer
Germaniastrasse 17-19
D-4000 Düsseldorf 1(DE)

(72) Erfinder: Fischer, Wolfgang
Gartenstrasse 35
D-4000 Düsseldorf(DE)

(72) Erfinder: Ripphausen, Hermann
Raderbroicher Strasse 15
D-4044 Kaarst 2(DE)

(74) Vertreter: Meyer, Alfred, Dipl.-Ing. Dr. jur.
Kreuzstrasse 32
D-4000 Düsseldorf 1(DE)

(54) Vorrichtung zur Ermittlung einer relativen Beweglichkeit zwischen Teilen des Fahrwerks oder der Lenkung bei einem Fahrzeug.

(57) Die Erfindung betrifft eine Vorrichtung zur Ermittlung einer relativen Beweglichkeit zwischen Teilen des Fahrwerkes oder der Lenkung bei einem Fahrzegg, insbesondere zur Ermittlung des Spiels zwischen Teilen der Radaufhängung und der Lenkung bei einem Kraftwagen. Es ist bekannt, die Räder einer Fahrzeugachse auf zwei Aufstandsplatten aufzufahren und beide Aufstandsplatten gegensinnig anzutreiben. Hierdurch werden auf die zu überprüfenden Teile entsprechende Belastungskräfte aufgebracht. Demgegenüber besteht die Erfindung darin, daß jetzt nur eine einzige Aufstandsplatte 15 verwendung findet, während das andere Rad der Fahrzeugachse fest aufsteht. Eine besondere Ausgestaltung der Erfindung besteht weiterhin darin, eine solche Aufstandsplatte (15) schwimmend anzuordnen.

Fig. 1

## Vorrichtung zur Ermittlung einer relativen Beweglichkeit zwischen Teilen des Fahrwerks oder der Lenkung bei einem Fahrzeug

Die Erfindung betrifft eine Vorrichtung zur Ermittlung einer relativen Beweglichkeit zwischen Teilen des Fahrwerks oder der Lenkung bei einem Fahrzeug, insbesondere zur Ermittlung des Spiels zwischen Teilen der Radaufhängung und der Lenkung bei einem Kraftwagen, unter Verwendung mindestens einer Aufstandsplatte, die durch mindestens einen Antrieb quer zur Fahrzeuglängsachse beweglich angeordnet ist.

Es ist eine Vorrichtung dieser Art bekannt, die für jedes Rad einer Achse jeweils eine Aufstandsplatte hat und bei der die Aufstandsplatten gegensinnig wahlweise in Längs- oder Querrichtung des Kraftwagens antreibbar sind. Die Räder werden also entsprechend mit gegensinnigen Längs- oder Querkräften beaufschlagt. Der Kraftwagen befindet sich hierbei über einer Inspektionsgrube und wird durch einen Wagenheber angehoben. Letzterer verringert das von den Aufstandsplatten aufzunehmende Gewicht und trägt während der Kraftbeaufschlagung durch die Aufstandsplatten auch zur Fixierung des Kraftwagens in seiner Lage bei.

2,

Die bekannte Vorrichtung erfordert also die Verwendung von zwei Aufstandsplatten mit den zugehörigen Antrieben und die Verwendung eines Wagenhebers zumindest dann, wenn die Vorrichtung auch für schwerere Kraftwagen, d.g. für größere Aufstandsgewichte anwendbar sein soll, damit die Leistung der Antriebe für die Aufstandsplatten nicht zu groß bemessen werden muß.

Nachteilig ist es ferner, daß bei gegensinnigem Antrieb der beiden Aufstandsplatten in Längsrichtung des Kraftwagens kein genaues Vorgeben der eigentlichen Lenkbewegung möglich ist, so daß sich ein eventuell vorhandenes Lenkspiel oft nicht in seinem ganzen Ausmaß erkennen läßt. Dies liegt daran, daß bei einer Kraftbeaufschlagung in Längsrichtung die Vorderräder abgebremst sein müssen. Die Handbremse wirkt aber meist nur auf die Hinterräder, so daß für eine entsprechende Prüfung eine zweite Person erforderlich ist, die die Fußbremse betätigt. Wenn sich aber das Fahrzeug bei der Prüfung auf einer Hebebühne befindet, so ist auch dies, weil unzulässig, nicht möglich.

Darüber hinaus ist auch insgesamt der für die Herstellung der bekannten Vorrichtung erforderliche Aufwand nachteilig, denn die Verwendung zweier Aufstandsplatten mit den zugehörigen Steuerungen erfordert entsprechende Herstellungskosten sowie auch einen ausreichend großen Freiraum neben der Inspektionsgrube. Auch müssen die Aufstandsplatten jeweils so breit bemessen sein, daß Kraftwagen mit unterschiedlichen Spurbreiten aufgefahren werden können.

3

Hiervon ausgehend lag der Erfindung die Aufgabe zugrunde,
eine Vorrichtung der eingangs genannten Art dahingehend
zu verbessern, daß der für die Herstellung und Anordnung
einschließlich Montage erforderliche Aufwand bei gleichzeitiger Verbesserung der Funktionstüchtigkeit der Vorrichtung
wesentlich herabgesetzt wird.

Zur Lösung dieser Aufgabe wird erfindungsgemäß vorgeschlagen, daß die Vorrichtung nur eine Aufstandsplatte aufweist,
auf die das Rad des Fahrzeugs auffahrbar ist, und daß
bei Gebrauch der Vorrichtung das jeweils zweite Rad einer
Fahrzeugachse fest aufsteht.

Der besondere Vorteil der nach der Erfindung ausgebildeten
Vorrichtung besteht darin, daß diese mit nur einer Aufstandsplatte voll funktionsfähig ist. Der für die Vorrichtung
erforderliche technische Aufwand ist wesentlich geringer,
weil eine zweite Aufstandsplatte nicht erforderlich ist.
Es wird nicht einmal ein Wagenheber benötigt. Die auf das
eine Rad von der Aufstandsplatte her ausgeübten Kräfte
übertragen sich sowohl bei Antrieb der Aufstandsplatte in
Querrichtung als auch bei einer Drehbewegung derselben bis
hin zu dem anderen fest aufstehenden Rad, so daß alle in
Frage kommenden Bereiche auf eine relative Beweglichkeit
von Teilen gegeneinander überprüft werden können.

Da nur eine einzige Aufstandsplatte benötigt wird, ergibt

4

sich eine entsprechende Einsparung in bezug auf die zugehörigen Teile der Steuerung. Darüber hinaus wird auch wesentlich weniger Raum zur Anordnung der Vorrichtung benötigt. Die Vereinfachung bzw. Einsparung erstreckt sich auch auf die Montage der Vorrichtung. Da nur eine Aufstandsplatte erforderlich ist, besteht keine Abhängigkeit mehr von der jeweiligen Spurbreite des Fahrzeuges, was einen weiteren wichtigen Vorteil darstellt.

Es ist zwar bekannt, eine Aufstandsplatte mittels einer von unten her wirkenden Gegenkraft gegenüber ihrem Auflager abzustützen. Hierdurch wird die Aufstandsplatte bei ihrer Bewegung in der Antriebsrichtung gegenüber ihrem Auflager im Sinne einer Herabsetzung der Reibungskräfte entlastet. Diese Entlastung erfolgt bei der bekannten Vorrichtung mit Hilfe von federbeaufschlagten Kugeln. Die Federkraft ist so gewählt, daß nur bei schwereren aufstehenden Kraftwagen die Aufstandsplatte zusätzlich von ihrem Auflager getragen wird.

Hierbei ist es nachteilig, daß durch die federbelasteten Kugeln ein verhältnismäßig großer technischer Aufwand bedingt ist. Auch wird für die Vorrichtung eine entsprechend große Konstruktionshöhe benötigt.

Im Rahmen der Erfindungsaufgabe können auch diese Nachteile beseitigt werden, wenn gemäß einem weiteren Vorschlag der

5

Erfindung die auf eine Aufstandsplatte jeweils von
unten her ausgeübte Gegenkraft durch ein hydraulisches
oder pneumatisches Polster gebildet ist, auf dem die
Aufstandsplatte schwimmend angeordnet ist.

Ein solches Polster läßt sich insbesondere mit Hilfe von
Druckluft, die am Ort der Überprüfung eines Kraftwagens
meist zur Verfügung steht, ohne großen technischen Aufwand
schaffen. Die schwimmend angeordnete Aufstandsplatte läßt
sich mit einer verhältnismäßig geringen Antriebsleistung
bewegen, da die bei der Bewegung zu überwindende Reibung
entsprechend klein ist. Auch ergibt sich eine verhältnismäßig geringe Konstruktionshöhe für die Vorrichtung.

Von besonderem Vorteil ist ferner die Tatsache, daß sich
aufgrund der schwimmenden Anordnung der Aufstandsplatte
sowohl die Bewegung derselben in Querrichtung als insbesondere auch im Sinne einer Lenkbewegung, also als
Drehbewegung, in exakter Weise durch die Antriebe vorgeben
läßt. Dies gilt auch für die Überprüfung schwererer
Fahrzeuge, denn auch dann ist die zusätzliche Verwendung
eines Wagenhebers zur Entlastung der Aufstandsplatte
in keinem Fall erforderlich.

In weiterer Ausgestaltung hierzu wird erfindungsgemäß
vorgeschlagen, daß die Aufstandsplatte in einer horizontalen

6

Ebene frei beweglich auf dem Polster schwimmend angeordnet ist. Hierdurch erhält die Aufstandsplatte genügend
Bewegungsfreiheit für alle in Betracht kommenden Antriebsrichtungen der Aufstandsplatte. Insbesondere ist dies
günstig bei einer Simulation der Lenkbewegung mittels einer
Drehbewegung der Aufstandsplatte, wobei sich selbsttätig
ein Drehpunkt der Aufstandsplatte um eine Achse einstellt,
die im Bereich der Aufstandsplatte konstruktiv nicht fixiert
ist und die sich genau im Aufstandsbereich bildet, wie es
später noch im einzelnen beschrieben wird. In jedem Fall
ist die Anwendung einer Drehbewegung für die Überprüfung
wesentlich vorteilhafter als das Aufbringen gegensinniger
Längskräfte, deren Nachteile eingangs beschrieben wurden.

Erfindungsgemäß läßt sich also die auf dem Polster schwimmend angeordnete Aufstandsplatte um eine vertikale Achse

- 7 -

drehbeweglich antreiben. Hierzu schlägt die Erfindung
vor, daß an der Aufstandsplatte zwei ungefähr quer zur
Längsrichtung des Fahrzeugs wirksame Antriebe angreifen
und daß der Angriffspunkt des einen Antriebs in der Längsrichtung gesehen vor der Aufstandsfläche des Rades und
der Angriffspunkt des anderen Antriebes hinter der Aufstandsfläche des Rades angeordnet sind.

Da die Aufstandsplatte auf dem Polster schwimmend beweglich
ist, können die beiden Antriebe zur Simulation einer Lenkbewegung gegenläufig angetrieben werden, wobei sich der
Drehpunkt für die Aufstandsplatte immer genau im Bereich
der Aufstandsfläche des Rades bilden wird, und zwar aufgrund
der zwischen dem Rad und der Aufstandsplatte vorhandenen
Reibung. Die Kraftbeaufschlagung für die Lenkbewegung wird
also immer genau im Bereich der Aufstandsfläche erfolgen,
ohne daß hierzu das betreffende Rad genau über eine konstruktiv vorgegebene Drehachse gefahren werden muß.

Vorteilhaft ist es ferner, daß bei gleichsinniger Beaufschlagung der beiden derart angeordneten Antriebe die gewünschte Kraftbeaufschlagung in Querrichtung bewirkt wird.

Die Antriebe können jeweils als beidseitig beaufschlagbare
Kolben-Zylinder-Antriebe ausgebildet sein. An der Aufstandsplatte oder den Antrieben kann ferner jeweils eine die

8

Rückführung in eine mittlere Ausgangsstellung bewirkende
Federkraft angreifen. Die Beaufschlagung der Antriebe
kann hydraulisch oder pneumatisch erfolgen.

In weiterer Ausgestaltung der Erfindung wird vorgeschlagen,
daß ein Luftpolster zwischen der Aufstandsplatte und einer
unterhalb derselben angeordneten Unterplatte ausgebildet
ist. Letztere ist also feststehend angeordnet und kann z.B.
Öffnungen aufweisen, aus denen Druckluft austritt. Günstig
ist es, wenn die Öffnungen durch mehrere verteilt angeordnete
Düsen gebildet sind, damit die Aufstandsplatte in allen
Flächenbereichen möglichst gleichmässig getragen wird.
Ferner können die Öffnungen oder Düsen in Vertiefungen der
Unterplatte münden, deren Fläche größer ist als der Austrittsquerschnitt der Öffnungen oder Düsen. Hierdurch wird eine
bessere Druckverteilung erreicht.

Weiterhin wird erfindungsgemäß vorgeschlagen, daß die Aufstandsplatte größer ist als die Unterplatte und den Rand
derselben überragt. Hierbei können die Antriebe an dem
die Unterplatte überragenden Teil der Aufstandsplatte angreifen, was zu konstruktiven Vorteilen führt.

Im Hinblick auf die von der Aufstandsplatte auszuführende
Drehbewegung kann es im Rahmen der konstruktiven Ausbildung
der Vorrichtung günstig sein, wenn die Aufstandsplatte

9

an ihrer in Längsrichtung der Fahrzeugachse gesehen
vorderen und hinteren Seitenkante sich zur Mitte der Seitenkante hin verbreitert.

Eine besonders günstige Ausführungsform der Erfindung
ist gegeben, wenn während des Betriebes Druckluft kontinuierlich in den zwischen der Aufstandsplatte und der
Unterplatte gebildeten Raum einströmt und im Bereich der
Plattenränder im wesentlichen frei austritt. Da für den
Betrieb der Vorrichtung größere Druckluftmengen nicht
benötigt werden, ist die Verwendung eines geschlossenen
Drucksystems nicht erforderlich. Die frei austretende Druckluft bewirkt gleichzeitig eine ständige Reinigung und
gegebenenfalls auch Trocknung des Raums zwischen der Aufstandsplatte und der Unterplatte und gewährleistet damit
einen störungsfreien Betrieb.

Grundsätzlich ist es aber auch in Abwandlung der bisher beschriebenen Ausgestaltung der Erfindung denkbar, daß die Aufstandsplatte Bestandteil eines im wesentlichen geschlossenen und an den Seiten durch einen Faltenbalg oder dergleichen begrenzten Luftraumes ist.

Im Bedarfsfall kann anstelle von Druckluft als Polster auch ein in einem druckdichten flexiblen Behälter enthaltenes hydraulisches Medium dienen. Man kann hierbei Wasser oder auch Öl verwenden, die beide eine geringe Reibung zwischen Oberseite und Unterseite des Behälters und damit die erforderliche Beweglichkeit der Oberseite oder einer auf ihr angeordneten Aufstandsplatte gewährleisten.

Da sich insbesondere bei Verwendung der Vorrichtung für leichtere Fahrzeuge ein großer Teil der zuvor erläuterten Vorteile mit einer Vorrichtung erreichen läßt, die nur eine einzige Aufstandsplatte hat, und zwar unabhängig davon, ob diese schwimmend angeordnet ist oder nicht, soll insoweit der Gegenstand des Anspruchs 2 Sonderschutz genießen.

Nachfolgend wird eine besonders bevorzugte Ausführungsform der Erfindung anhand einer Zeichnung näher beschrieben. Im einzelnen zeigen:

Fig. 1 in schematischer Darstellung die Vorderansicht
einer neben einer Inspektionsgrube montierten
Vorrichtung;

Fig. 2 eine Draufsicht auf die Darstellung nach Fig. 1;

Fig. 3 in vergrößertem Maßstab einen schematischen Vertikalschnitt durch die montierte Vorrichtung entlang der Linie III-III in Fig. 5;

Fig. 4 in vergrößertem Maßstab einen Teilschnitt durch

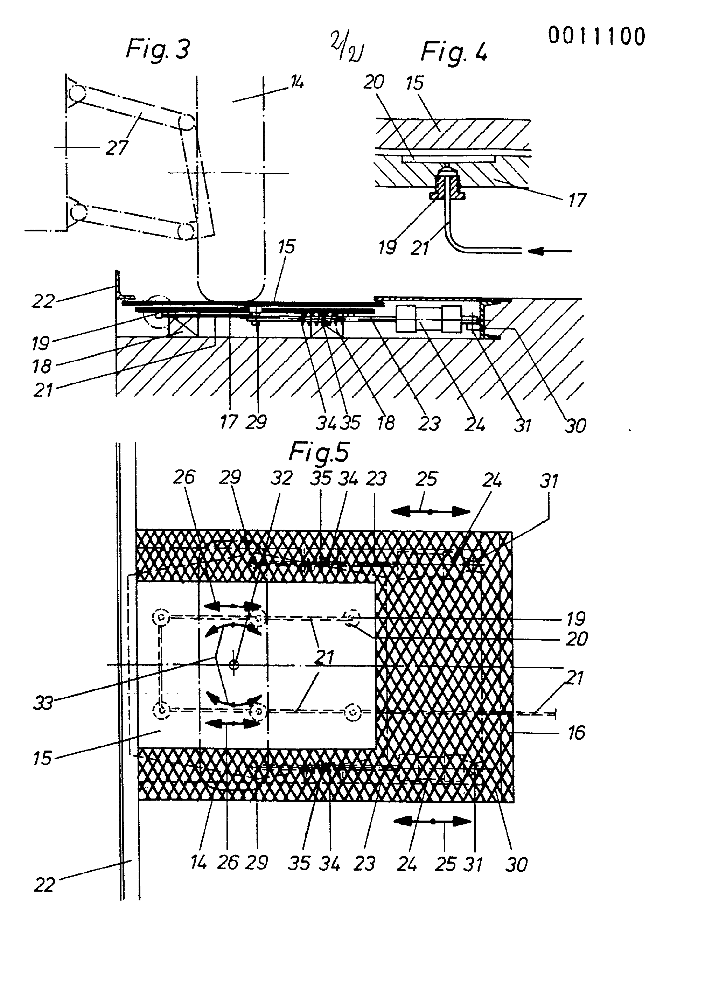

den in Fig. 3 durch einen Kreis bezeichneten Teil
der Vorrichtung;

Fig. 5 eine Draufsicht auf die Darstellung nach Fig. 3.

Ein Kraftwagen 1o ist so über eine Inspektionsgrube 11
gefahren, daß das eine Vorderrad 12 auf einer Fahrbahn 13
zu einer Seite der Inspektionsgrube 11 fest aufsteht, während das andere Vorderrad 14 auf einer Aufstandsplatte 15
der Vorrichtung zu stehen kommt. Letztere befindet sich
unterhalb einer entsprechend groß bemessenen Aussparung,
die in einem als Abdeckung dienenden Riffelblech 16 vorgesehen ist.

Eine Unterplatte 17 wird von Konsolen 18 getragen und ist
feststehend montiert. Die Unterplatte 17 ist etwa so groß

12

wie die Aussparung im Riffelblech 16 und liegt unterhalb dieser Aussparung.

In die Unterplatte 17 sind von unten her in etwa gleichmäßiger Verteilung über die Plattenfläche Düsen 19 eingesetzt, von denen jede in eine in der Oberseite der Unterplatte 17 ausgebildete Vertiefung 2o mündet. Letztere ist jeweils wesentlich größer als der Austrittsquerschnitt einer Düse 19. Wenn bei noch abgeschaltetem Luftdruck die Aufstandsplatte 15 auf der Unterplatte 17 aufliegt, kann sich beim Einschalten des Luftdrucks dieser über eine entsprechend verbreiterte Fläche aufbauen und wirksam werden. Zum Zuführen von Druckluft dient ein Leitungssystem 21.

Die Aufstandsplatte 15 ist größer bemessen als die Unterplatte 17 und kann mit ihren Randbereichen somit das Riffelblech 16 und an der einen Seite auch ein Winkeleisen 22 untergreifen, welches eine Seite der Inspektionsgrube 11 begrenzt. Gesehen in Längsrichtung des Kraftwagens 1o hat die Aufstandsplatte 15 in ihrer Mitte die größte Breite, während sie zu den beiden anderen Seitenkanten hin schmäler wird. In den durch die Verbreiterung gebildeten beiden Randbereichen greift jeweils eine Kolbenstange 23 gelenkig an, die mit einem in einem Zylinder 24 angeordneten und beidseitig beaufschlagbaren Kolben verbunden ist. Indem

13

der Kolben wahlweise auf der einen oder der anderen Seite mit einem vorzugsweise hydraulischen Medium beaufschlagt wird, lassen sich die Kolbenstangen 23 und damit die Aufstandsplatte 15 in der jeweiligen Richtung antreiben.

Sobald die Druckluft eingeschaltet ist und die Aufstandsplatte 15 somit auf einem Luftpolster schwimmt bzw. von diesem getragen wird, können auch die Antriebe eingeschaltet werden. Werden die Zylinder 24 bzw. die in diesen angeordneten Kolben jeweils in gleicher Richtung beaufschlagt, so wird die Aufstandsplatte 15 in gerader Richtung quer zur Längsachse des Kraftwagens 1o angetrieben. Durch entsprechende Umschaltung kann eine Hin- und Herbewegung in dieser Richtung entsprechend den Pfeilen 25 erreicht werden. Entsprechend wird das Vorderrad 14 in Querrichtung hin- und herbewegt, wie es durch die Pfeile 26 angedeutet ist. Die hierbei auf das Vorderrad 14 ausgeübte Kraft wird durch das ganze Fahrwerk 27 bis zu dem fest aufstehenden Vorderrad 12 hin übertragen, so daß der ganze Fahrwerksbereich auf ein in dieser Richtung eventuell vorhandenes Spiel überprüft werden kann.

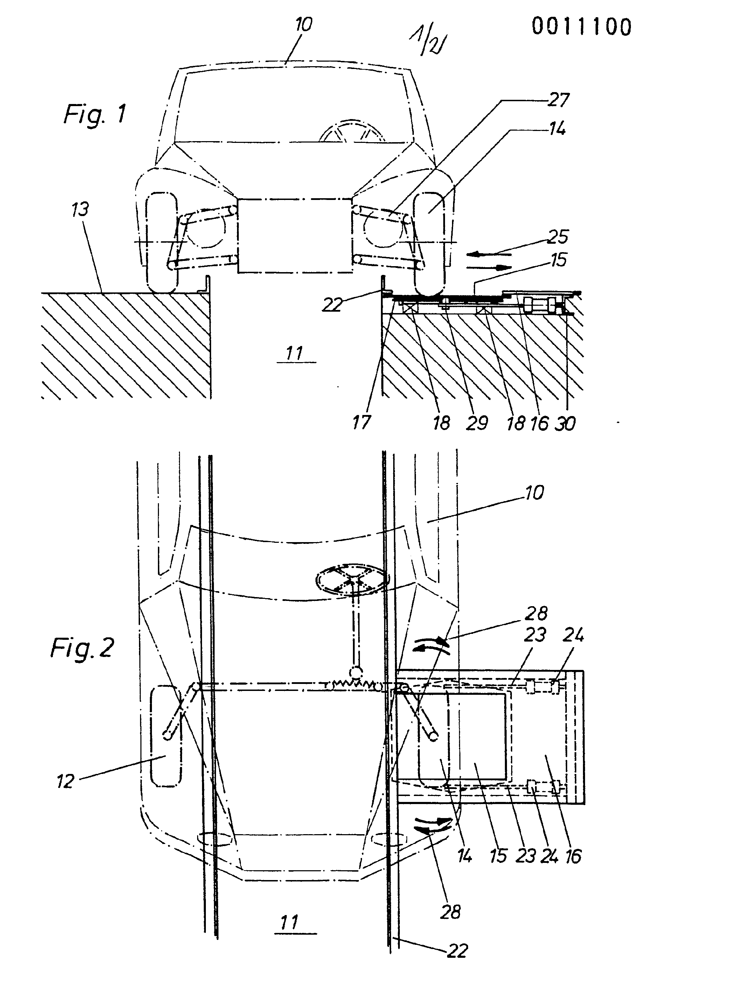

Durch entsprechende Steuerung der Zylinder 24 können die beiden Kolbenstangen 23 aber auch jeweils in entgegengesetzter Richtung angetrieben werden, um eine Drehbewegung der Aufstandsplatte 15 zu erzeugen, wie sie in Fig. 2 durch

14

die Pfeile 28 dargestellt ist. Um die Drehbeweglichkeit
zu ermöglichen, sind die Kolbenstangen 23 an der Aufstandsplatte 15 mittels eines Gelenkzapfens 29 befestigt, während sich die Zylinder 24 an einem festen Träger 3o über
einen weiteren Gelenkzapfen 31 abstützen. Die Aufstandsplatte 15 kann sich zwar innerhalb des vorgegebenen Bewegungsbereiches in einer horizontalen Ebene frei bewegen;
bei aufstehendem Vorderrad 14 jedoch ist diese Freiheit
nicht mehr unbegrenzt vorhanden, denn aufgrund des Gewichtes und  der zwischen dem Vorderrad 14 und der Aufstandsplatte 15 bestehenden Reibung bildet sich eine Drehachse
32 genau im Aufstandsbereich. Es läßt sich somit durch
gegenläufigen Antrieb der Zylinder 24 auf das Vorderrad 14
eine Drehkraft aufbringen, durch die das Vorderrad 14 sich
um genau dieselbe Achse dreht, als wenn es durch die Lenkung angetrieben wird. Durch entsprechendes Umsteuern
der Zylinder 24 kann auch diese, durch die Pfeile 33 angedeutete Lenkbewegung in beiden Richtungen ausgeführt werden.
Auch hier sind die auf das Vorderrad 14 aufgebrachten
Kräfte wieder bis hin zum Vorderrad 12 wirksam, so daß der
ganze Fahrwerk- und Lenkbereich auf entsprechendes Spiel
in dieser Richtung überprüft werden kann.

Unabhängig davon, ob eine Drehbewegung der Aufstandsplatte 15 oder eine geradlinige Bewegung in Querrichtung

15

erfolgt, ist die Rückstellung in eine mittlere Ausgangslage mit Hilfe einer Feder 34 gewährleistet. Jede Feder
34 ist mit ihren beiden Enden an der Unterplatte 17 befestigt. Die jeweils zugeordnete Kolbenstange 23 durchsetzt
die Feder und hat einen im mittleren Federbereich sich mit
der Feder 34 verhakenden Anschlag 35. Hierdurch ist jede
Feder 34 in zwei Teile unterteilt, von denen das eine
jeweils auf Zug und das andere auf Druck beansprucht werden.

Für eine einwandfreie Funktion der Vorrichtung wird es
im allgemeinen ausreichen, wenn die die Aufstandsplatte 15
tragende Druckluftschicht nur etwa 1 mm, eventuell sogar
etwas weniger, beträgt. Hierauf ist dann die konstruktive
Dimensionierung der Vorrichtung abzustellen.

1o Kraftwagen

11 Inspektionsgrube

12 Vorderrad

13 Fahrbahn

14 Vorderrad

15 Aufstandsplatte

16 Riffelblech

17 Unterplatte

18 Konsole

19 Düse

2o Vertiefung

21 Leitungssystem

22 Winkeleisen

23 Kolbenstange

24 Zylinder

25 Pfeil

26 Pfeil

27 Fahrwerk

28 Pfeil

29 Gelenkzapfen

3o Träger

31 Gelenkzapfen

32 Drehachse

33 Pfeil

34 Feder

35 Anschlag

Dipl.-Ing. Dr. jur. Alfred W. Meyer
Patentanwalt

4 Düsseldorf 1
Kreuzstraße 32
Telefon: (0211) 32596

0011100

Mein Zeichen: 6912 A 13

Aktenzeichen.

Anmelder: Fischer-Stahlbau Karl Josef Fischer
4ooo Düsseldorf 1, Germaniastraße 17-19

Patentansprüche:

1. Vorrichtung zur Ermittlung einer relativen Beweglichkeit zwischen Teilen des Fahrwerks oder der Lenkung bei einem Fahrzeug, insbesondere zur Ermittlung des Spiels zwischen Teilen der Radaufhängung und der Lenkung bei einem Kraftwagen, unter Verwendung mindestens einer Aufstandsplatte, die durch mindestens einen Antrieb quer zur Fahrzeuglängsachse beweglich angeordnet sind, dadurch gekennzeichnet, daß die Vorrichtung nur eine Aufstandsplatte (15) aufweist, auf die das Rad des Fahrzeugs auffahrbar ist, und daß bei Gebrauch der Vorrichtung das jeweils zweite Rad (12) einer Fahrzeugachse fest aufsteht.

2. Vorrichtung zur Ermittlung einer relativen Beweglichkeit zwischen Teilen des Fahrwerks oder der Lenkung bei einem Fahrzeug, insbesondere zur Ermittlung des Spiels zwischen Teilen der Radaufhängung und der Lenkung bei
einem Kraftwagen, unter Verwendung von Aufstandsplatten,
die durch mindestens einen Antrieb quer zur Fahrzeuglängsachse beweglich angeordnet und mittels einer von
unten her wirksamen Gegenkraft gegenüber ihrem Auflager
abgestützt sind, insbesondere nach Anspruch 1, dadurch
gekennzeichnet, daß die Gegenkraft durch ein hydraulisches oder pneumatisches Polster gebildet ist, auf dem
die Aufstandsplatte (15) schwimmend angeordnet ist.


3. Vorrichtung nach Anspruch 2, dadurch gekennzeichnet, daß
die Aufstandsplatte (15) in einer horizontalen Ebene
frei beweglich auf dem Polster schwimmend angeordnet ist.


4. Vorrichtung nach einem der vorherigen Ansprüche, dadurch
gekennzeichnet, daß die auf dem Polster schwimmend
angeordnete Aufstandsplatte um eine vertikale Achse (32)
drehbeweglich angetrieben ist.


5. Vorrichtung nach einem der vorherigen Ansprüche, dadurch
gekennzeichnet, daß an der Aufstandsplatte (15) zwei
ungefähr quer zur Längsrichtung des Fahrzeugs (1o) wirksame Antriebe (23,24) angreifen und daß der Angriffspunkt des
einen Antriebs (23,24) in der Längsrichtung gesehen vor der
Aufstandsfläche des Rades (14) und der Angriffspunkt des anderen Antriebs (23,24) hinter der Aufstandsfläche des
Rades (14) angeordnet sind.

6. Vorrichtung nach einem der vorherigen Ansprüche, dadurch
gekennzeichnet, daß die Antriebe jeweils als beidseitig
beaufschlagbare Kolben-Zylinder-Antriebe (23,24) ausgebildet sind.

7. Vorrichtung nach einem der vorherigen Ansprüche, dadurch
gekennzeichnet, daß an der Aufstandsplatte (15) oder
den Antrieben (23,24) jeweils eine die Rückführung in
eine mittlere Ausgangsstellung bewirkende Federkraft
(Feder 34) angreift.

8. Vorrichtung nach einem der vorherigen Ansprüche, dadurch gekennzeichnet, daß ein Luftpolster zwischen der Aufstandsplatte (15) und einer unterhalb derselben angeordneten
Unterplatte (17) ausgebildet ist.

9. Vorrichtung nach Anspruch 8, dadurch gekennzeichnet, daß
die Unterplatte (17) Öffnungen (19) aufweist, aus denen
Druckluft austritt.

1o. Vorrichtung nach Anspruch 9, dadurch gekennzeichnet, daß
die Öffnungen durch mehrere verteilt angeordnete Düsen (19)
gebildet sind.

0011100

11. Vorrichtung nach Anspruch 9 oder 1o, dadurch gekennzeichnet, daß die Öffnungen oder Düsen (19) in Vertiefungen (2o) der Unterplatte (17) münden, deren Fläche größer ist als der Austrittsquerschnitt der Öffnungen oder Düsen (19).

12. Vorrichtung nach einem der vorherigen Ansprüche, dadurch gekennzeichnet, daß die Aufstandsplatte (15) größer ist als die Unterplatte (17) und den Randbereich derselben überragt.

13. Vorrichtung nach Anspruch 12, dadurch gekennzeichnet, daß die Antriebe (23,24) an dem die Unterplatte (17) überragenden Teil der Aufstandsplatte (15) angreifen.

14. Vorrichtung nach einem der vorherigen Ansprüche, dadurch gekennzeichnet, daß die Aufstandsplatte (15) an ihren in Längsrichtung der Fahrzeugachse gesehen vorderen und hinteren Seitenkanten sich zur Mitte der Seitenkanten hin verbreitert.

15. Vorrichtung nach einem der vorherigen Ansprüche, dadurch gekennzeichnet, daß während des Betriebes Druckluft kontinuierlich in den zwischen der Aufstandsplatte (15) und der Unterplatte (17) gebildeten Raum einströmt und im Bereich der Plattenränder im wesentlichen frei austritt.

16. Vorrichtung nach einem der Ansprüche 1 bis 14, dadurch gekennzeichnet, daß die Aufstandsplatte (15) Bestandteil eines im wesentlichen geschlossenen und an den Seiten durch einen Faltenbalg oder dergleichen begrenzten Luftraumes ist.

17. Vorrichtung nach einem der Ansprüche 1 bis 14, dadurch gekennzeichnet, daß als Polster ein in einem druckdichten flexiblen Behälter enthaltenes hydraulisches Medium dient.

*Fig. 1*

*Fig. 2*

Fig. 3

Fig. 4

2/2

0011100

Fig.5

**EUROPÄISCHER RECHERCHENBERICHT**

0011100

Nummer der Anmeldung

EP 79 10 3395

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 060 584 (DAIMLER-BENZ AG) <br><br> ⋇ Seite 2, Figur 2 ⋇ <br><br> -- | 1 |
| | FR - A - 2 091 887 (AUTOMOBILE PEUGEOT et al.) <br><br> ⋇ Seite 4, Figuren 1,2 ⋇ <br><br> -- | 1-3 |
| A | DE - B - 1 530 639 (DAIMLER BENZ AG) <br><br> ⋇ Ansprüche; Figuren ⋇ <br><br> -- | 1 |
| A | DE - A - 2 801 855 (TECHNOTRUCK BV) <br><br> ⋇ Ansprüche; Figuren ⋇ <br><br> -- | 1 |
| A | FR - A - 2 153 895 (APPAREILLAGE TECHNIQUE ET INDUSTRIE SA) <br><br> ⋇ Seite 5; Figur ⋇ <br><br> ---- | 1 |

**KLASSIFIKATION DER ANMELDUNG (Int.Cl. 3)**

G 01 M 17/06
G 01 B 5/255

**RECHERCHIERTE SACHGEBIETE (Int. Cl. 3)**

G 01 M 17/00
       17/06
G 01 B 5/00
       5/14
       5/255

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-03-1980 | VAN ASSCHE |